# EUROPÄISCHE PATENTSCHRIFT

(11) **EP 0 616 180 B1**
(45) Veröffentlichungstag und Bekanntmachung des Hinweises auf die Patenterteilung: **08.10.1997**
(21) Anmeldenummer: 94103278.1
(22) Anmeldetag: 04.03.1994
(51) Int. Cl.: F24J 2/20

(54) **Absorber mit Strömungswegen für einen strömenden Wärmeträger**
Absorber with conduits for a conveying working fluid
Absorbeur avec conduits de circulation d'liquide caloporteur

(30) Priorität: 15.03.1993 DE 4308158
(43) Veröffentlichungstag der Anmeldung: 21.09.1994
(73) Patentinhaber: Lechner, Rudolf, D-78224 Singen (DE)
(72) Erfinder: Lechner, Rudolf, D-78224 Singen (DE)
(74) Vertreter: Hiebsch, Gerhard F., Dipl.-Ing.

(56) Entgegenhaltungen:
- DE-A- 3 040 987
- DE-A- 4 102 511
- US-A- 4 080 955

## Beschreibung

Die Erfindung betrifft einen Absorber mit Strömungswegen für einen strömenden Wärmeträger -- wie Wasser -- zu dessen Erwärmung durch Sonnenenergie, bei dem die Strömungswege von mindestens einer randwärts flüssigkeitsdicht festliegenden Folie aus transluzentem Werkstoff begrenzt sind, wobei der Folie wenigstens eine Platte mit einer Oberfläche zugeordnet ist.

Bei sog. Sonnenheizungen werden Energiespeicher eingesetzt, die beispielsweise aus Kautschukmatten bestehen, in denen rohrartige Strömungsbahnen kaltes Wasser aus einem Vorlaufrohr aufnehmen und in diesen Strömungsbahnen -- unter Erwärmung durch Sonneneinstrahlung -- zu einem Rücklauf leiten. Derartige Absorber werden vor allem zum direkten Wärmen von Schwimmbadwasser eingesetzt, das üblicherweise mittels Pumpen umgewälzt wird.

Im Gegensatz zu dieser direkten Erwärmung eines Brauchwassers bedarf es bei indirekten Systemen eines flüssigen Wärmeträgers wie -- gegebenenfalls mit Frostschutzmittel gemischtem -- Wasser, der/das flächige Rohrsystem in geschlossenem Kreislauf durchströmt sowie in einem Wärmetauscher seine Energie unter Hinnahme von Verlusten an einen angrenzenden Brauchwasserkreislauf abgibt.

Solarkollektoren werden zumeist mit einer Neigung --beispielsweise auf einer Dachebene -- installiert, und ihr Wärmeträger wird mit zunehmender Temperatur zu dem am oberen Ende der Kollektorfläche vorgesehenen Wärmetauscher in natürlichem Kreislauf (Thermosyphon) aufwärts getrieben, um nach Energieentzug wieder abwärts zu gelangen.

Diese der Sonne ausgesetzten Kollektoren können beispielsweise zwischen zwei parallelen Flächen dazu quer verlaufende Trennwände zur Begrenzung des Strömungsweges aufweisen oder aber an eine Fläche angeformte Rohrstücke, deren parallele Mündungen durch jeweils ein Querrohr miteinander verbunden sind, um sie an Vor- und Rücklauf anschließen zu können.

Die eingesetzten Materialien für die Strömungswege sollen witterungsbeständig, temperatur- und chemikalien fest, d.h. alterungsbeständig sein. Der Einfluß der Witterung kann --insbesondere bei indirekten Systemen für die Dachinstallation -- beispielsweise dadurch gemindert werden, daß man jene aus synthetischem Kautschuk wie polymerisierten Äthylenen und Propylenen hergestellten kanaldurchzogenen Flächengebilde in einem Gehäuse unter eine Glasplatte setzt, die gleichzeitig in diesem Gehäuse einen Wärmestau erzeugt.

Ein Nachteil bekannter Absorbermatten und -körper ist ihre verhältnismäßig aufwendige Herstellung, ein weiterer Mangel besteht bei den direkten Heizsystemen insbesondere für Schwimmbäder darin, daß das Wasser während seines Durchganges durch den Kollektor seine unerwünschte Bakterien fracht zumindest beibehält.

Einen Absorber der eingangs genannten Art ist in der DE-OS 41 02 511 beschrieben mit einer bevorzugt schwarz eingefärbten Platte oder Deckplatte, die mit -- dem Muster der Strömungswege entsprechenden -- Durchbrüchen versehen sowie mit einer Folie flächig belegt ist, wonach letztere durch die Durchbrüche hindurch zu Rinnenprofilen oder Folienkanälen verformt und anschließend -- gegebenenfalls auch vorher -- in den zwischen diesen vorhandenen Zonen mit der Deckplatte verbunden wird. Diese Zonen sollen eben sein, um ein thermisches Verbinden mit Druck- oder Schweißorganen zu begünstigen; dank der ebenen Fläche dieser Schweißzonen kann man für den Schweißvorgang vor allem eine kontinuierliche Schweißmaschine einsetzen, da es für diese Hindernisse oder Stoßkanten nicht gibt, wie sie beispielsweise beim Schweißen einer verformten Folie auf der Platte -- statt der durch diese hindurchreichenden Folienkanäle -- vorhanden wären. Da also das Schweißen -- oder Andrücken bei einem Klebevorgang -- der Folie an der den Folienkanälen abgekehrten Plattenseite erfolgt, ist ein sehr einfaches und kostengünstiges Herstellen solcher Absorberkörper gewährleistet.

Insbesondere bei den erwähnten schräg gestellten Absorberkörpern wirkt die Absorberflüssigkeit im unteren Bereich mit besonders hohem Druck auf die Folie/n ein, so daß unerwünschte Sackbildungen entstehen.

In Kenntnis dieses Standes der Technik hat sich der Erfinder das Ziel gesetzt, einen kostengünstig herstellbaren und langlebigen Absorber zu schaffen, der schnell zusammenbaubar ist und dessen Folie/n dem Flüssigkeitsdruck auch in Neigungslagen möglichst gleichmäßigen Widerstand entgegensetzen. Zudem soll der Absorber in der Lage sein, bakteriologische Verunreinigungen des durchströmenden Wassers od.dgl. zu beseitigen.

Zur Lösung dieser Aufgabe führt eine Vorrichtung nach Patentanspruch 1, die Unteransprüche geben günstige Weiterbildungen an.

Erfindungsgemäß ist/sind die Folie/n miteinander oder mit der Platte durch Klemmstücke aus zwei aufeinanderliegenden Formkörpern verbunden, welche jeweils eine querschnittlich wellenartige Oberfläche aufweisen; beide aufeinanderliegenden Oberflächen greifen ineinander, und die Formkörper werden von wenigstens einem stiftartigen Befestigungsorgan --insbesondere durch eine Schraube -- zusammengepreßt. Diese Formkörper sind vorzugsweise scheibenartig ausgebildet und - bevorzugt um einen Zentralkanal - mit konzentrischen Ringwulsten und Ringnuten versehen; die Ringwulste der einen Oberfläche ruhen dabei in den Ringnuten der anderen Oberfläche und klemmen die Folie/n dichtend ein.

Im Rahmen der Erfindung liegen auch entsprechende leisten- oder stegartige Formkörper, welche die beschriebene Ober flächen paarung bilden und von Schrauben durchsetzt sind-diese Leisten mit teilkreisförmigen Enden können statt längerer Schweißzonen eingesetzt werden.

Zur besseren Anbringung der Folie hat es sich als günstig erwiesen, daß von der Oberfläche des einen Formkörpers zumindest ein exzentrischer Stift -- bevorzugt mehrere --aufragt, der in ein Loch des anderen Formkörpers einsetzbar ist. Dank dessen ist es beispielsweise möglich, den stiftbesetzten Formkörper unter der -- unteren -- schwarzen Folie anzuordnen und die Stifte durch diese hindurchzutreiben, um die Lage des unter der intransparenten Folie verborgenen Formkörpers erkennbar zu machen.

Vorteilhafterweise besitzt wenigstens ein Formkörper einen Durchlaß, der als Zu- oder Ablauf mit dem Innenraum des Absorberkörpers verbunden ist; infolge dieser Maßgabe entfallen besonders abzudichtende Perforationen zum Anbringen von Zu- oder Abläufen für das Strömungsmittel.

Werden an sich bekannte Absorberkörper mit Schweißzonen in der/den Folie/n zur Begrenzung der Strömungswege eingesetzt, enden erfindungsgemäß die streifenartigen Schweißzonen jeweils an einem Klemmstück; ein unerwünschtes Aufreißen wird so verhindert.

Die Folie/n kann ein Rahmen aus zwei Profilen umgeben, welche mit jeweils einer querschnittlich wellenartig ausgebildeten Oberfläche aufeinanderliegen und in der zu den Formteilen beschriebenen Art zwischen sich die Folie/n klemmend halten, wie dies beispielhaft in der FR-OS 2 417 729 dargestellt wird. Durch Zusatzprofile, die zwischen den Rahmenprofilen festgelegt werden, kann der Rahmen eine vorbestimmbare größere Höhe erhalten. Auch diese Rahmen können mit dem oben beschriebenen Durchlaß ausgestattet werden.

Bei einer erfindungsgemäßen Ausgestaltung ist ein Teil jenes Rahmens und/oder des Klemmstücks aus einer Basisplatte od. dgl. Flächenstück herausgeformt, dem nach einem anderen Merkmal der Erfindung auf der anderen Folienseite ein Drahtnetz oder ein Lochblech gegenüberliegt, durch welches Lichtwellen zum Folienkörper zu gelangen vermögen. Letzterer enthält bevorzugt wenigstens eine UV-durchlässige sowie UV- und witterungsbeständige Folie.

Dank der Erfindung kann jede beliebige Ausgestaltung der erläuterten "Absteppung" der Folie/n mit absolut wasserdichtem Durchbruch erstellt werden. Auch können beliebige Mehrschichtaufbauten oder Sandwiches konstruiert werden, etwa solche mit dünnen Blechabdeckungen oder Drahtgitter-Abdeckungen; diese werden durch die tablettenartigen Klemmstücke dauerhaft und dicht festgelegt.

Weitere Vorteile und Einzelheiten der Erfindung ergeben sich aus der nachfolgenden Beschreibung bevorzugter Ausführungsbeispiele sowie anhand der Zeichnung; diese zeigt in
- Fig. 1:: eine Schrägsicht auf einen geschnittenen Teil eines Absorbers ;
- Fig. 2:: ein vergrößertes Detail der Fig 1;
- Fig. 3:: die Seitenansicht eines Absorbers;
- Fig. 4:: die Draufsicht auf einen Absorber mit Folien verbindenden Klemmstücken;
- Fig. 5:: die Draufsicht auf eine andere Ausführung des Absorbers;
- Fig. 6:: einen Querschnitt durch Fig. 5;
- Fig. 7:: die geschnittene Draufsicht auf die Oberfläche eines Klemmstücks in etwa natürlicher Größe;
- Fig. 8:: die geschnittene Seitenansicht zu Fig. 7 auf zwei Teile des Klemmstückes;
- Fig. 9:: eine der Fig. 5 etwa entsprechende Wiedergabe eines weiteren Absorbers;
- Fig. 10:: einen Schnitt durch Fig. 9 nach deren Linie X - X;
- Fig. 11:: einen vergrößerten Teil der Fig. 9, 10 in Schrägsicht;
- Fig. 12, 13 und Fig. 14:: drei verschiedene Absorber im Längsschnitt;
- Fig. 15:: ein Absorber in geschnittener Schrägsicht.

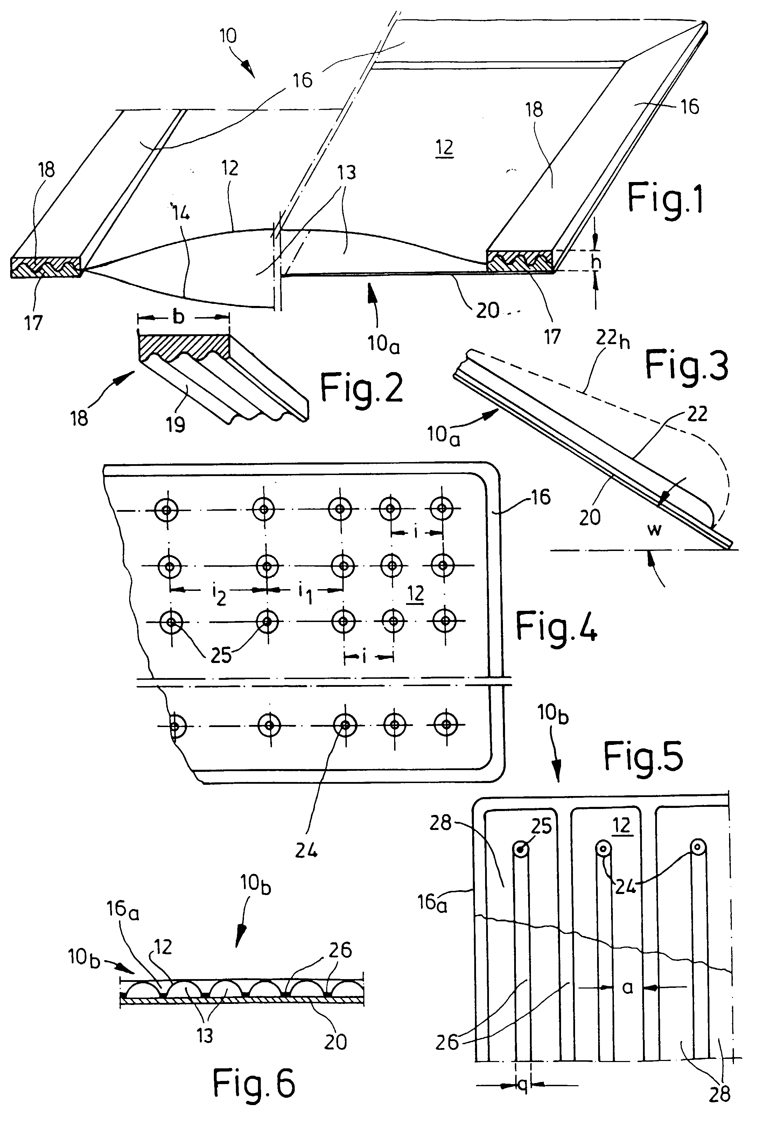

Ein flacher Absorber- oder Durchlaufkörper 10 für Brauchwasser, eine Wärmeträgerflüssigkeit oder ein Gas als Wärmeträger einer Kollektoranlage besteht nach Fig. 1 aus einer transluzenten Folie 12 aus UV-durchlässigem sowie UV- und witterungsbeständigem Kunststoff über einer im gewählten Ausführungsbeispiel schwarz eingefärbten Basisfolie 14 sowie einem diese Folien 12, 14 klemmend haltenden Rahmen 16 -- der Breite b von hier 24 mm und der Höhe h von 14 mm -- aus zwei aufeinanderliegenden Profilen 17, 18, die jeweils eine Oberfläche 19 wellenförmigen Querschnitts aufweisen; der Querschnitt des oberen Strangpreßprofils 18 ist gegenüber dem des unteren Strangpreßprofils 17 seitenversetzt, so daß in zusammengesetzter Klemmlage ein rechteckiger Querschnitt des Rahmens 16 entsteht.

Beim Absorber 10a der rechten Hälfte der Fig. 1 ist die untere Folie 14 durch eine starre Platte 20 ersetzt, die dicht mit dem Rahmen 16 verbunden ist.

Wird der Absorber 10a nach Fig. 3 in einem Winkel w geneigt aufgestellt, bildet sich durch das Gewicht des im Innenraum 13 strömenden Wassers -- statt der idealen Kammlinie 22 der Folie 12 -- eine Art Wassersack und mit diesem die Kontur 22h in Fig. 3. Um diese Erscheinung zu vermeiden, sind die Folien 12, 14 -- bzw. ist die obere Folie 12 mit ihrer Basis- oder Tragplatte 20 -- durch in Draufsicht kreisförmige Klemmstücke 24 verbunden, die mittels sie durchsetzender Schrauben 25 od.dgl. Verbindungsstifte in einem Raster festgelegt sind. Der Rasterabstand i ist im unteren Vorrichtungsabschnitt des schräg gestellten Absorbers 10a nach Fig. 3 kürzer als der Rasterabstand i1, i2 im oberen -- druckärmeren -- Bereich.

Beim Beispiel eines Absorbers 10b der Fig. 5, 6 ist die transluzente Folie 12 aus UV-durchlässigem sowie UV- und witterungsbeständigem Kunststoff mit der hier schwarz eingefärbten Basis- oder Tragplatte 20 partiell im Bereich von Schweißzonen 26 der Breite q auf die Tragplatte 20 so aufgeschweißt, daß mäanderartige Strömungswege 28 der Breite a für das Wasser entstehen. Die Enden der linienförmigen Schweißzonen 26 sind durch die Klemmstücke 24 gegen Reißen gesichert. Der Rahmen 16a wird hier von einem Randwulst gebildet.

Das Klemmstück 24 besteht aus zwei tablettenartigen Formteilen 30, 31 aus Kunststoff eines Durchmessers d von etwa 42 mm, die jeweils einen zentralen Kanal 32 für die Schraube 25 od.dgl. Befestigungsmittel enthalten.

Zwischen dem Zentralkanal 32 und dem Umfang 34 -- die beide von jeweils einer Formwand 35, 36 bestimmt sind -- erstreckt sich die querschnittlich gewellte Oberfläche 29 des jeweiligen Formteils 30, 31.

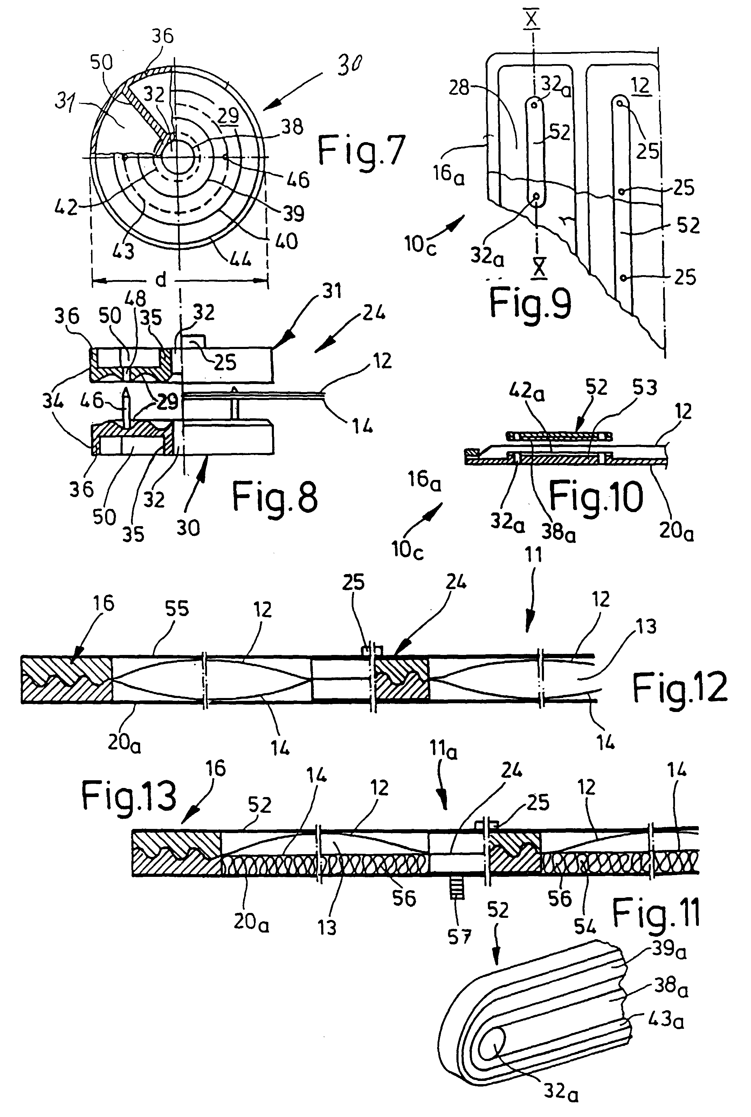

In Fig. 7 sind der besseren Unterscheidung halber die Ringwulste an ihren Kammlinien mit 38, 39, 40 bezeichnet, die tiefsten Stellen der dazwischen liegenden Ringtäler oder Ringnuten mit 42, 43, 44.

Wie vor allem Fig. 8 verdeutlichen soll, passen die Ringwulste 38, 39, 40 des einen Formteils 30 oder 31 in die Ringnuten 42, 43, 44 des anderen Formteils 31 oder 30. Das in Fig. 8 untere Formteil 30 ist mit zwei nadelartigen Stiften 46 versehen, die in Löcher 48 des oberen Formteils 31 einzugreifen vermögen, wobei zwischengelegte Folien 12, 14 von den nadelartigen Stiften 46 haltend durchgriffen werden.

Mit 50 sind in Fig. 7, 8 Radialrippen an den Außenseiten der Formteile 30, 31 bezeichnet.

Der Absborber 10c der Fig. 9, 10 weist -- statt der Schweißzonen 26 in Fig. 5 -- streifenförmige Klemmstege 52 mit mehreren Schraubendurchbrüchen 32a für Schrauben 25 auf. Die in Fig. 10 nach unten weisende Oberfläche des obenliegenden Klemmsteges 52 ist an den halbkreisförmigen Enden so ausgebildet wie die halbe Oberfläche 29 des Formteils 30 bzw. 31, d.h. um die Schraubendurchbrüche 32a sind Ringnutabschnitte und Ringwulstabschnitte gelegt, die sich dazwischen als gerade Wulste 38a, 39a und Nuten 43a fortsetzen (Fig. 11). Der Klemmgegensteg 53 ist in Fig. 10 aus der Basisplatte 20a unmittelbar herausgeformt und seinerseits mit Gegenwulsten und Gegennuten 42a ausgestattet.

Der Absorber 11 der Fig. 12 läßt unterhalb der Folien 12, 14 ein -- gegebenenfalls schwarzes -- Basisblech 20a erkennen und oberhalb der Folie 12, 14 ein Lochblech oder Drahtgeflecht 55, welches die Lichtwellen zur Folie 12 durchläßt.

Der Absorber 11a der Fig. 13 zeigt eine Isolierschicht 56 zwischen dem Basisblech 20a und der unteren Folie 14 sowie einen Durchlaß 57 als Zu- oder Abfluß für den Zelleninnenraum 13; dieser Durchlaß 57 ist durch das Klemmstück 24 geführt, verläuft also außerhalb des abgedichteten Raumes.

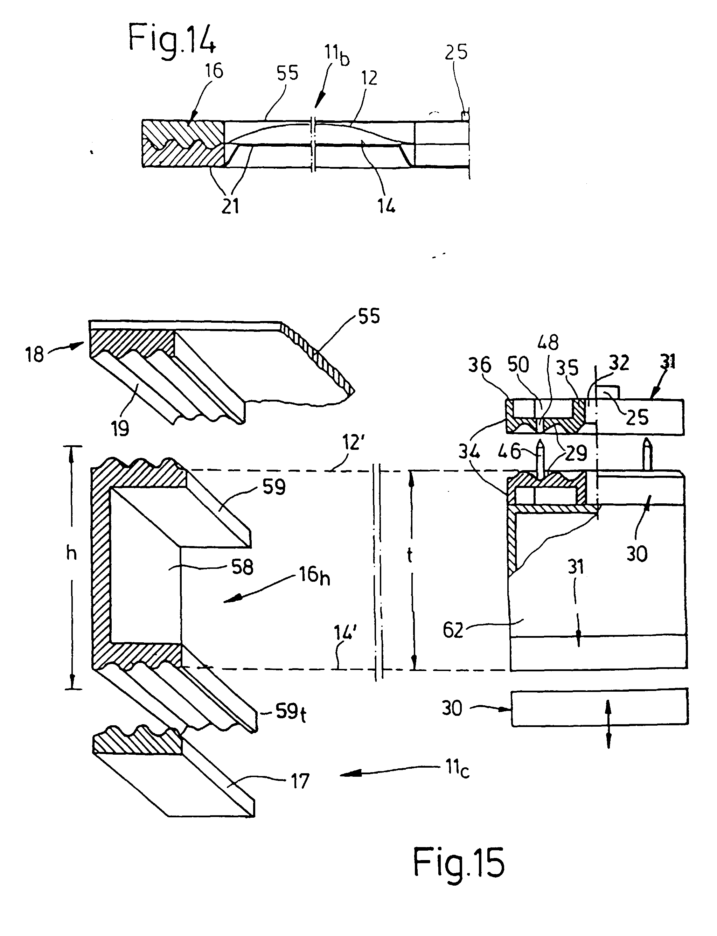

Schließlich verdeutlicht Fig. 14 einen Absorber 11b, der Höhe h von etwa 14 mm, dessen ebene untere Folie 14 sich auf einem gekröpften Basisblech 21 abstützt sowie Fig. 15 einen Absorber 11c, dessen Rahmen 16h aus den beiden beschriebenen Profilen 17, 18 und einem zwischengeschalteten U-Profil 58 besteht, so daß die Rahmenhöhe h hier etwa 60 mm beträgt; die Oberflächen der Profilschenkel 59, 59t sind querschnittlich wellenförmig und den Oberflächen 19 der Rahmenprofile 17, 18 angepaßt. Entsprechend sind auch zwei Formteile 30, 31 des Klemmstücks 24 durch einen Klotz 62 so verbunden, daß bei 12', 14' nur angedeutete Folien in einem Abstand t festgelegt werden können.

Nicht dargestellt ist, daß ein in Fig. 13 an einem Klemmstück 24 dargestellter Durchlaß 57 auch am Rahmen 16, 16h vor allem aber am U-Profil 58 oder im Klotz 62, vorgesehen werden kann.

## Patentansprüche

1. Absorber mit Strömungswegen für einen strömenden Wärmeträger, beispielsweise Wasser, zu dessen Erwärmung durch Sonnenenergie, bei dem die Strömungswege von mindestens einer randwärts flüssigkeitsdicht festliegenden Folie (12,14) aus transluzentem Werkstoff begrenzt sind, wobei der Folie wenigstens eine Platte (20,20a,21) mit einer Oberfläche zugeordnet ist,
dadurch gekennzeichnet,
daß die Folie/n (12, 14) miteinander oder mit der Platte (20, 20a, 21) durch Klemmstücke (24) aus zwei aufeinander liegenden Formkörpern (30, 31; 52, 53) verbunden ist/sind, welche jeweils eine querschnittlich wellenartige Oberfläche (29) aufweisen, wobei beide Oberflächen aufeinanderliegend ineinandergreifen sowie die Formkörper von wenigstens einem stiftartigen Befestigungsorgan, insbesondere einer Schraube (25), zusammengedrückt sind.

2. Absorber nach Anspruch 1, dadurch gekennzeichnet, daß die Formkörper (30, 31) scheibenartig ausgebildet und um einen Zentralkanal (32) mit konzentrischen Ringwulsten (38, 39, 40) und Ringnuten (42, 43, 44) versehen sind, wobei die Ringwulste der einen Oberfläche (29) in die Ringnuten der anderen Oberflächen eingreifen.

3. Absorber nach Anspruch 1, dadurch gekennzeichnet, daß die Formkörper (52, 53) leisten- oder stegartig ausgebildet und an bohrungsartigen Durchbrüchen (32a) mit teilkreisförmigen konzentrischen Ringwulsten (38, 39, 40) und teilkreisförmigen Ringnuten (42, 43, 44) sowie sich zwischen diesen erstreckenden linearen Wulsten (38a, 39a) und Nuten (42a, 43a) versehen sind, wobei die Wulste der einen Oberfläche in die Nuten der anderen Oberfläche eingreifen.

4. Absorber nach einem der Ansprüche 1 bis 3, dadurch gekennzeichnet, daß von der Oberfläche (29) des einen Formkörpers (30, 53) zumindest ein exzentrischer Stift (46) aufragt, der in ein Loch (48) des anderen Formkörpers (31, 52) einsetzbar ist.

5. Absorber nach Anspruch 2 oder 3, gekennzeichnet durch wenigstens ein Paar exzentrischer Stifte (46) auf einem Durchmesser.

6. Absorber nach wenigstens einem der Ansprüche 1 bis 4, dadurch gekennzeichnet, daß eine Begrenzung der Strömungswege aus wenigstens einem Klemmstück (52, 53) gebildet ist.

7. Absorber nach wenigstens einem der Ansprüche 1 bis 4, dadurch gekennzeichnet, daß streifenartige Schweißzonen der Folien als Begrenzung der Strömungswege vorgesehen sind und jede streifenartige Schweißzone (26) an einem Klemmstück (24) endet.

8. Absorber nach wenigstens einem der Ansprüche 1 bis 7, dadurch gekennzeichnet, daß ihn ein Rahmen (16) aus Profilen umgibt, welche mit jeweils einer querschnittlich wellenartig ausgebildeten Oberfläche (19) aufeinanderliegen sowie zwischen sich die Folie/n (12, 14) klemmend halten.

9. Absorber nach einem der Ansprüche 1 bis 8, dadurch gekennzeichnet, daß Rahmen (16) und/oder Klemmstück (24, 53) mit wenigstens einer Platte (20, 20a, 21) od.dgl. Flächenstück fest verbunden sind/ist.

10. Absorber nach wenigstens einem der Ansprüche 1 bis 9, dadurch gekennzeichnet, daß wenigstens ein Formkörper (30, 31; 52, 53) und/oder der Rahmen (16, 16h) einen Durchlaß (57) aufweist, der als Zu- oder Ablauf des Absorberkörpers (10, 11) mit dessen Innenraum (13) verbunden ist.

11. Absorber nach einem der Ansprüche 1 bis 10, dadurch gekennzeichnet, daß Rahmen (16h) und/oder Klemmstück (24) mit Zusatzprofilen (58, 62) versehen sowie in der Höhe (h) veränderlich ausgebildet sind.

12. Absorber nach Anspruch 11, dadurch gekennzeichnet, daß zwischen zwei den Rahmen (16h) begrenzenden Rahmenprofilen (17, 18) ein U-Profil (58) als Zusatzprofil vorgesehen ist sowie die Rahmenprofile (17, 18) und die Schenkel (59, 59t) querschnittlich ineinander ergänzende gewellte Oberflächen (19) aufweisen, oder daß zwei Formteile (30, 31) zweier Klemmstückpaarungen durch einen Klotz (62) als Zusatzteil verbunden sind.

13. Absorber nach Anspruch 11 oder 12, dadurch gekennzeichnet, daß wenigstens ein Zusatzprofil (58, 62) einen Durchlaß (57) aufweist, der als Zu- oder Ablauf des Absorberkörpers (10, 11) mit dessen Innenraum (13) verbunden ist.

14. Absorber nach wenigstens einem der Ansprüche 1 bis 13, dadurch gekennzeichnet, daß ein Teil des Rahmens (17, 18) und/oder des Formkörpers (30, 31; 52, 53) aus einer Platte (20a) od.dgl. Flächenstück herausgeformt ist.

15. Absorber nach wenigstens einem der Ansprüche 1 bis 14, dadurch gekennzeichnet, daß er bzw. seine Platte (20, 20a, 21) in einem Winkel (w) geneigt verläuft.

16. Absorber nach Anspruch 11 oder 14, dadurch gekennzeichnet, daß der Platte (20, 20a, 21) auf der anderen Folienseite ein Drahtnetz oder ein Lochblech (55) gegenüberliegt.

17. Absorber nach wenigstens einem der Ansprüche 1 bis 16, gekennzeichnet durch eine Isolierschicht (56) zwischen Platte (20a) und Folie (14).

18. Absorber nach wenigstens einem der Ansprüche 1 bis 17, dadurch gekennzeichnet, daß er wenigstens eine UV-durchlässige sowie UV- und witterungsbeständige Folie (12) enthält.

## Claims

1. Absorber with flow paths for a heat transfer medium, e.g. water, for heating it by solar energy, in which the flow paths are delimited by at least one film (12, 14) of translucent material fixed in a liquid-tight manner towards its edges, at least one plate (20, 20a, 21) with a surface being associated with the film, characterised in that the film or films (12, 14) is/are joined together or to the plate (20, 20a, 21) by means of clamping pieces (24) consisting of two moulded bodies (30, 31; 52, 53) situated one on top of the other and each having a surface (29) with a wavy cross section, the two surfaces interlocking with one another one on top of the other and the moulded bodies being pressed together by at least one pin-type securing member, in particular a screw (25).

2. Absorber according to claim 1, characterised in that the moulded bodies (30, 31) are disc-shaped and are provided about a central channel (32) with concentric annular beads (38, 39, 40) and annular grooves (42, 43, 44), the annular beads of one surface (29) engaging the annular grooves of the other surfaces.

3. Absorber according to claim 1, characterised in that the moulded bodies (52, 53) are strip-shaped or bar-shaped and are provided at bore-shaped openings (32a) with arcuate concentric annular beads (38, 39, 40) and arcuate annular grooves (42, 43, 44) and linear beads (38a, 39a) and grooves (42a, 43a) extending between the latter, the beads of one surface engaging the grooves of the other surface.

4. Absorber according to one of claims 1 to 3, characterised in that at least one eccentric pin (46) projects from the surface (29) of one moulded body (30, 53) and can be inserted into a hole (48) in the other moulded body (31, 52).

5. Absorber according to claim 2 or claim 3, characterised by at least one pair of eccentric pins (46) on one diameter.

6. Absorber according to at least one of claims 1 to 4, characterised in that a boundary for the flow paths is formed by at least one clamping piece (52, 53).

7. Absorber according to at least one of claims 1 to 4, characterised in that strip-shaped weld zones of the films are provided to delimit the flow paths and each strip-shaped weld zone (26) ends at a clamping piece (24).

8. Absorber according to at least one of claims 1 to 7, characterised in that it is surrounded by a frame (16) of profiles resting one on top of the other by respective surfaces (19) with a wavy cross section and clamping the film or films (12, 14) between them.

9. Absorber according to one of claims 1 to 8, characterised in that the frame (16) and/or the clamping piece (24, 53) is/are rigidly connected to at least one plate (20, 20a, 21) or similar flat component.

10. Absorber according to at least one of claims 1 to 9, characterised in that at least one moulded body (30, 31; 52, 53) and/or the frame (16, 16h) has/have a passage (57) connected to the interior (13) of the absorber body (10, 11) as an inlet or outlet therefor.

11. Absorber according to one of claims 1 to 10, characterised in that the frame (16h) and/or the clamping piece (24) is/are provided with additional profiles (58, 62) and are of adjustable height (h).

12. Absorber according to claim 11, characterised in that a U-shaped profile (58) is provided as an additional profile between two frame profiles (17, 18) delimiting the frame (16h) and the frame profiles (17, 18) and the legs (59, 59t) have interlocking surfaces (19) with a wavy cross section, or that two moulded parts (30, 31) of two clamping piece pairs are connected together by a block (62) as an additional part.

13. Absorber according to claim 11 or claim 12, characterised in that at least one additional profile (58, 62) has a passage (57) connected to the interior (13) of the absorber body (10, 11) as an inlet or outlet therefor.

14. Absorber according to at least one of claims 1 to 13, characterised in that part of the frame (17, 18) and/or the moulded body (30, 31; 52, 53) is moulded from a plate (20a) or similar flat piece.

15. Absorber according to at least one of claims 1 to 14, characterised in that it or its plate (20, 20a, 21) is inclined at an angle (w).

16. Absorber according to claim 11 or claim 14, characterised in that the plate (20, 20a, 21) is opposite a wire mesh or a perforated metal sheet (55) on the other side of the film.

17. Absorber according to at least one of claims 1 to 16, characterised by an insulating layer (56) between the plate (20a) and the film (14).

18. Absorber according to at least one of claims 1 to 17, characterised in that it contains at least one UV-transmitting and UV- and weather-resistant film (12).

## Revendications

1. Absorbeur muni de passages d'écoulement pour un fluide caloporteur en écoulement, par exemple de l'eau, afin de l'échauffer par de l'énergie solaire, dans lequel les passages d'écoulement sont délimités par au moins un feuil (12, 14) en matériau translucide, fixé de façon étanche aux fluides à sa périphérie, tandis qu'au moins une plaque (20, 20a, 21) présentant une surface supérieure est associée à ce feuil,
caractérisé en ce que,
le (ou les) feuil(s) (12, 14) est (sont) relié(s) l'un à l'autre ou à la plaque (20, 20a, 21) par des pièces de pincement (24) constituées de deux corps profilés (30, 31 ; 52, 53) disposés l'un sur l'autre, ces corps présentant chacun, en section transversale, une surface ondulée (29), ces deux surfaces venant s'appliquer l'une sur l'autre et s'accrochant l'une à l'autre, pressées ensemble avec les corps profilés, à l'aide d'au moins un organe de fixation en forme de broche, en particulier une vis (25).

2. Absorbeur selon la revendication 1, caractérisé en ce que les corps profilés (30, 31) sont réalisés en forme de disque et sont munis autour d'un canal central (32) de bourrelets annulaires concentriques (38, 39, 40) et de rainures annulaires concentriques (42, 43, 44), les bourrelets annulaires de l'une des surfaces (29) pénétrant dans les rainures annulaires de l'autre surface.

3. Absorbeur selon la revendication 1, caractérisé en ce que les corps profilés (52, 53) sont réalisés en forme de barrettes ou de traverses et sont munis au niveau de passages en forme d'alésage (32a) de bourrelets annulaires concentriques en forme d'arc de cercle (38, 39, 40) et de rainures annulaires en forme d'arc de cercle (42, 43, 44), ainsi que de bourrelets linéaires (38a, 39a) et de rainures linéaires (42a, 43a) s'étendant entre ceux-ci, les bourrelets de l'une des surfaces s'engageant dans les rainures de l'autre surface.

4. Absorbeur selon l'une des revendications 1 à 3, caractérisé en ce que, à partir de la surface (29) de l'un des corps profilés (30, 53) fait saillie au moins une broche excentrique (46) qui est susceptible d'être insérée dans un trou (48) de l'autre corps profilé (31, 52).

5. Absorbeur selon la revendication 2 ou 3, caractérisé par au moins deux broches excentriques (46) réparties sur un diamètre.

6. Absorbeur selon au moins l'une des revendications 1 à 4, caractérisé en ce qu'une limitation des passages d'écoulement est constituée par au moins une pièce de pincement (52, 53).

7. Absorbeur selon au moins l'une des revendications 1 à 4, caractérisé en ce que des zones de soudage en forme de bandes des feuils sont prévues comme limitations des passages d'écoulement et en ce que chaque zone de soudage (26) en forme de bande s'arrête sur une pièce de pincement (24).

8. Absorbeur selon au moins l'une des revendications 1 à 7, caractérisé en ce qu'il est entouré par un cadre (16) en profilés, qui sont superposés et présentent chacun une surface (19) de forme ondulée en coupe transversale, les feuils (12, 14) étant retenus par pincement entre ces surfaces.

9. Absorbeur selon au moins l'une des revendications 1 à 8, caractérisé en ce que le cadre (16) et/ou les pièces de pincement (24, 54) est (sont) relié(s) rigidement à une plaque (20, 20a, 21) ou une pièce plate similaire.

10. Absorbeur selon au moins l'une des revendications 1 à 9, caractérisé cn ce qu'au moins un corps profilé (30, 31 ; 52, 53) et/ou le cadre (16, 16h) comportent un passage (57), qui est relié à l'espace intérieur (13) du corps de l'absorbeur (10, 11) pour servir d'alimentation ou de sortie.

11. Absorbeur selon l'une des revendications 1 à 10, caractérisé en ce que le cadre (16h) et/ou la pièce de pincement (24) sont munis de profilés supplémentaires (58, 62) et sont également agencés pour présenter en leur hauteur (h) une forme variable.

12. Absorbeur selon la revendication 11, caractérisé en ce que entre deux profilés de cadre (17, 18) délimitant le cadre (16h), est prévu un profilé en U (58) comme profilé supplémentaire, et en ce que les profilés de cadre (17, 18) et les branches (59, 59t) présentent des surfaces ondulées (19) complémentaires l'une de l'autre, ou bien en ce que deux corps profilés (30, 31) de deux paires de pièces de pincement sont reliées par un bloc (62) servant de pièces complémentaires.

13. Absorbeur selon la revendication 11 ou 12, caractérisé en ce qu'au moins un profilé supplémentaire (58, 62) comporte un passage (57) qui est relié à l'espace intérieur (13) du corps de l'absorbeur (10, 11) pour servir d'alimentation ou de sortie.

14. Absorbeur selon au moins l'une des revendications 1 à 13, caractérisé en ce qu'une partie du cadre (17, 18) et/ou du corps profilé (30, 31 ; 52, 53) est formée à partir d'une plaque (20a) ou d'une pièce plate similaire.

15. Absorbeur selon au moins l'une des revendications 1 à 14, caractérisé en ce que lui ou sa plaque (20, 20a, 21) est disposé(e) incliné(e) sous un angle (w).

16. Absorbeur selon la revendication 11 ou 14, caractérisé en ce que un treillis métallique ou une tôle perforée (55) est disposé sur l'autre face du feuil en face de la plaque (20, 20a, 21) .

17. Absorbeur selon au moins l'une des revendications 1 à 16, caractérisé par une couche isolante (56) entre la plaque (20a) et le feuil (14).

18. Absorbeur selon au moins l'une des revendications 1 à 17, caractérisé en ce qu'il comporte au moins un feuil (12) perméable aux U.V. tout en étant résistant aux U.V. et aux intempéries.
